# EUROPÄISCHE PATENTSCHRIFT

(11) **EP 1 877 741 B1**
(45) Veröffentlichungstag und Bekanntmachung des Hinweises auf die Patenterteilung: **11.08.2010**
(21) Anmeldenummer: 06753487.5
(22) Anmeldetag: 04.05.2006
(51) Int. Cl.: G01J 1/06, G01J 1/42, B60H 1/00

(54) **VORRICHTUNG ZUR ERFASSUNG VON UMGEBUNGS- UND VORFELDLICHT IN EINEM KRAFTFAHRZEUG**
DEVICE FOR DETECTING AMBIENT LIGHT AND LIGHT IN THE AREA IN FRONT OF A MOTOR VEHICLE
DISPOSITIF POUR DETECTER DE LA LUMIERE DU MILIEU ENVIRONNANT ET DU CHAMP AVANT DANS UNE AUTOMOBILE

(30) Priorität: 04.05.2005 DE 102005021336; 21.11.2005 DE 102005055306
(43) Veröffentlichungstag der Anmeldung: 16.01.2008
(73) Patentinhaber: Preh GmbH, 97616 Bad Neustadt a.d. Saale (DE)
(72) Erfinder: JEITNER, Martin, 97645 Ostheim (DE); GLIENICKE, Haiko, 97616 Salz (DE); SCHELBERT, Harald, 97631 Bad Königshofen (DE); VORMANN, Dirk, 97616 Bad Neustadt (DE)
(74) Vertreter: Lohmanns, Bernard
(86) Internationale Anmeldenummer: PCT/EP2006/004191
(87) Internationale Veröffentlichungsnummer: WO 2006/117226

(56) Entgegenhaltungen:
- EP-A- 1 566 654
- US-A- 4 808 812

## Beschreibung

Die Erfindung betrifft eine Umgebungslichtsensorik zur Integration in ein Kraftfahrzeug und zur Erfassung des Umgebungslichtes sowie der Erfassung des Lichtes im Vorfeld des Kraftfahrzeuges.

In heutigen Kraftfahrzeugen werden mehr und mehr Sensoren eingebaut, um die Witterungs- und Umgebungsbedingungen im Bereich des Kraftfahrzeuges zu erfassen und entsprechende Systeme im Kraftfahrzeug zu regeln oder zu steuern. So ist es beispielsweise bekannt, im Bereich der Windschutzscheibe Sensoren zu platzieren, die einen beginnenden Regen oder einen möglichen Beschlag an der Innenseite der Scheibe detektieren. Darüber hinaus werden Sensoren eingesetzt, die das auf das Kraftfahrzeug einfallende Licht erfassen und das ermittelte Signal an zum Beispiel eine Regelung einer Klimaanlage im Kraftfahrzeug weiterleiten. Ebenso gibt es Sensoren, die das Licht im Vorfeld des Kraftfahrzeugs detektieren, um beispielsweise bei einer Annäherung an einen Tunnel die sich ändernden Lichtverhältnisse zu erfassen und geeignete Maßnahmen, wie zum Beispiel das Einschalten des Lichtes selbstständig vorzunehmen. Für die Erfassung des Umgebungslichtes und das Licht im Vorfeld des Kraftfahrzeug sind verschiedenste Sensoren und Anordnungen im Kraftfahrzeug bekannt.

Aus der DE 196 30 216 A1 ist eine fahrsituationsabhängige Lichtsteuerung für ein Kraftfahrzeug mit einer Umgebungslichtsensorik bekannt, wobei die Umgebungslichtsensorik sowohl einen Umgebungslichtsensor mit breitem Erfassungskegel als auch einen fahrtrichtungsspezifischen Lichtsensor mit schmaleren, in Fahrtrichtung weisendem Erfassungskegel umfasst. Hierbei ist der Umgebungslichtsensor aus einem Mehrquadranten-Solarpositionssensor und der fahrfrichtungsspezifische Sensor aus einem lichtempfindlichen Fotoelement gebildet. Der Erfassungskegel des fahrtrichtungsspezifischen, das heißt in Fahrtrichtung vorausschauenden Lichtsensors, besitzt einen Öffnungswinkel von typischerweise etwa 20°. Die Begrenzung des Öffnungswinkels wird hierbei entweder durch eine optische Linse oder eine Lochblende oder durch die Plazierung des lichtempfindlichen Fotoelementes im Brennpunkt eines Parabolspiegels vorgenommen.

Aus der US 4,808,812 A Ist eine Umgebungslichtsensorik gemäß dem Oberbegriff des Anspruchs 1 bekannt.

Aufgabe der Erfindung ist es, eine Umgebungsllchtsensorik bereitzustellen, die es ermöglicht, dass Umgebungslicht, sowie das Licht im Vorfeld des Kraftfahrzeuges mittels eines Lichtleitelementes zu erfassen und separat auszuwerten. Darüber hinaus soll die Sensoranordnung kleinstbauend und konstruktiv einfach aufgebaut und kostengünstig zu fertigen sein,

Die erfindungsgemäße Aufgabe wird dadurch gelöst, dass eine Umgebungslichtsensorik gemäß Anspruch 1 bereitgestellt wird. Bei der erfindungsgemäßen Umgebungslichtsensorik ist es vorgesehen, dass diese ein hinter einer transparenten Fläche des Kraftfahrzeuges angeordnetes Lichtleitelement und mindestens zwei am Lichtleltelement angeordneten Sensoren aufweist und dass in einer der transparenten Fläche zugeordneten Oberfläche des Lichtleitelementes mindestens zwei Kanten vorhanden sind, wobei eine erste Kante einen ersten Oberflächenbereich begrenzt, durch den das Umgebungslicht in das Lichtleitelement einleitbar ist und eine zweite Kante eines zweiten Oberflächenbereichs begrenzt, durch den das Vorfeldlicht in das Lichtleitelement einleitbar ist und dass der Bereich zwischen den beiden Kanten mit einem Werkstoff abgedeckt ist, der für den Spektralbereich des durch die Sensoren erfassten Lichtes undurchlässig ist. Die erfindungsgemäße Umgebungslichtsensorik zeichnet sich dadurch aus, dass das Lichtleitelement eine im Querschnitt im Wesentlichen dreieckige Form aufweist, und dass hinter je einem Schenkel des Dreiecks ein Sensor angeordnet ist, so dass das Vorfeldlicht auf einen Schenkel des Dreiecks und das Umgebungslicht auf den anderen Schenkel geleitet werden kann, und an das Lichtleitelement in Richtung des Umgebungslichtsensors eine Verlängerung angeformt ist, so dass das senkrecht auf das Kraftfahrzeug einfallende Licht ebenfalls senkrecht durch das Lichtleitelement (2) geleitet werden kann und somit von dem unterhalb der Verlängerung angeordneten Sensor als Umgebungslicht detektierbar ist und in Richtung des Vorfeldlichtsensors eine kugelige-, gewölbte oder linsenförmige Anformung angeformt ist, die das Vorfeldlicht fokussiert und das senkrecht auf das Lichtleitelement einfallende Umgebungslicht eliminiert.

Durch die erfindungsgemäße Ausbildung der Umgebungslichtsensorik ist nun die Möglichkeit geschaffen, mit konstruktiv einfachsten Mitteln und somit kostengünstig eine Umgebungslichtsensorik bereit zu stellen, die es ermöglicht, in kleinstbauender Weise das Licht im Vorfeld und das Umgebungslicht mittels eines Lichtleitelementes zu erfassen. Die hierzu in die Oberfläche des Lichtleitelementes eingebrachten Kanten begrenzen hierbei einen ersten Bereich, durch den das Umgebungslicht in das Lichtleitelement gelangt, sowie einen zweiten Bereich, durch den das Licht im Vorfeld des Kraftfahrzeuges vornehmlich auf die dazugehörigen, hinter dem Lichtleitelement angebrachten Sensoren fällt. Hierbei wird das Lichtleitelement bevorzugt In einer, im Wesentlichen als dreieckig beschreibbaren Form ausgebildet. Durch diese dreieckige Ausbildung und die Anordnung der Kanten beziehungsweise des Licht absorbierenden Bereiches an der der transparenten Oberfläche zugewandten Seite des Lichtleitelementes wird vornehmlich das Licht des Vorfeldes auf einen Schenkel des Dreiecks und andererseits das Umgebungslicht auf den anderen Schenkel des Dreiecks geleitet.

Das Lichtleitelement besitzt eine als dreieckig beschreibbare Querschnittsform und eine räumliche Tiefe. Die Kanten verlaufen hierbei in einer bevorzugten Ausführungsform parallel zur räumlichen Erstreckung des Lichtleitelementes. In einer vorteilhaften Ausgestaltungsvariante der Erfindung verlaufen die parallelen Kanten im Wesentlichen parallel zum oberen Ende der Windschutzscheibe und damit im Wesentlichen parallel horizontal zum Untergrund, wie beispielsweise der Fahrbahn, des Kraftfahrzeugs. Hierbei wird das Lichtleitelement zum Beispiel auf die Innenseite einer Windschutzscheibe aufgeklebt. Durch die parallelen Kanten im Lichtleitelement ist somit der Lichtleiter in einen oberen und einen unteren Bereich, die durch die Kanten begrenzt sind, unterteilt. Das Umgebungslicht wird bevorzugt durch den ersten oberen Bereich oberhalb der ersten und oberen Kante erfasst. Das Licht im Vorfeld des Kraftfahrzeuges wird durch den zweiten unterhalb der zweiten Kante angeordneten Bereich des Lichtleitelementes erfasst. In einer vorteilhaften Ausgestaltungsvariante der Erfindung ist an das Lichtleitelement unterhalb des ersten Bereichs zur Erfassung des Umfeldlichts eine Verlängerung angeformt, so dass das senkrecht auf das Kraftfahrzeug einfallende Licht ebenfalls senkrecht durch das Lichtleitelement geleitet werden kann und somit von einem unterhalb der Verlängerung angeordneten Sensor als Umgebungslicht detektierbar ist.

Das Licht des Vorfeldes wird bevorzugt durch den unterhalb der zweiten Kante angeordneten Bereich erfasst. Hierbei ist selbstverständlich, dass die beiden Kanten beabstandet zueinander angeordnet sind. Das horizontal auf das Lichtleitelement treffende Licht im Vorfeld des Kraftfahrzeuges fällt auf den zweiten Bereich und wird ebenfalls horizontal durch das Lichtleitelement transportiert und gelangt auf den senkrecht angeordneten Schenkel des Lichtleitelementes und wird hier erfasst. In einer vorteilhaften Ausgestaltung des Lichtleitelementes, ist an diesen senkrechten Schenkel eine kugelige, gewölbte oder linsenförmige Anformung angebracht, die einerseits das Vorfeldlicht fokussiert und andererseits das senkrecht auf das Lichtleitelement einfallende Licht der Umgebung eliminiert. Die Anformung fokussiert das Licht in Richtung eines hinter der Anformung angebrachten fotosensitiven Sensor.

Das zwischen dem ersten oberen Bereich, oberhalb der ersten Kante und dem zweiten unteren Bereich unterhalb der zweiten Kante im Lichtleitelement angeordneten Bereich ist mit einem Werkstoff beschichtet oder versehen, der für den Spektralbereich des durch die Sensoren erfassten Lichtes undurchlässig ausgewählt ist. Hierdurch werden die beiden Bereiche des Lichteinfalls deutlich voneinander unterscheidbar. In einer vorteilhaften Ausführungsform der Erfindung ist der Bereich zwischen den beiden Kanten als V-förmige Nut ausgebildet, wodurch die Lichteinfallbereiche noch stärker voneinander abgegrenzt werden.

Nachfolgend wird die Erfindung anhand von Zeichnungen näher erläutert. Es zeigt:
- Figur 1: die Seitenansicht auf eine Umgebungslichtsensorik gemäß der Erfindung,
- Figur 2: eine dreidimensionale Ansicht auf eine erfindungsgemäß ausgebildete Umgebungs- lichtsensorik, die teilweise geschnitten dargestellt ist und
- Figur 3: eine prinzipielle Darstellung der Erfassung des Lichtes im Vorfeld sowie der Um- gebung des Kraftfahrzeuges.

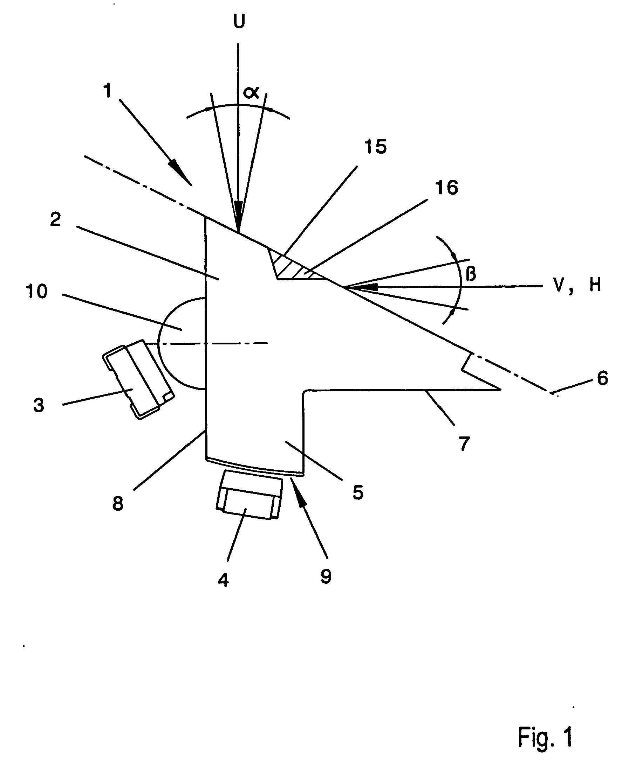

In der Figur 1 ist eine Sensoranordnung 1, die auch als Umgebungslichtsensorik 1 bezeichenbar ist, in der Seitenansicht dargestellt. Die Sensoranordnung 1 besteht aus einem Lichtleitelement 2, das unmittelbar hinter einer nicht dargestellten Windschutzscheibe eines Kraftfahrzeugs angeordnet ist, aus einem ersten photosensitiven Sensor 3 zur Erfassung des Lichtes im Vorfeld V des Kraftfahrzeuges und einem zweiten photosensitiven Sensor 4 zur Erfassung des Umgebungslichtes U. Das Lichtleitelement 2 besteht aus einem üblichen lichtleitenden Kunststoff und beschreibt in dieser Ausführungsform im groben die Form eines Dreiecks mit einer Verlängerung 5 in Richtung des Sensors 4. Die Schräge 6 gibt im Wesentlichen den schrägen Verlauf einer im Kraftfahrzeug angeordneten Windschutzscheibe wieder.

Im Bereich des schrägen Verlaufs 6, der Hypotenuse des Dreiecks des Lichtleitelementes 2, tritt das Licht, mit Ausnahme des schraffierten Bereiches der Blende 15, über die gesamte Länge in das Lichtleitelement ein. Das in das Lichtleitelement 2 über die Schräge 6 eintretende Licht wird durch das Lichtleitelement 2 geleitet und fällt auf die das Lichtleitelement 2 begrenzenden, mit einem lichtabsorbierenden Mittel versehenen Flächen 7, 8, die das Lichtleitelement 2 an allen äußeren Seiten umgeben, an dem das Licht nicht eingeleitet beziehungsweise an die Sensoren 3, 4 weitergeleitet wird, das heißt ein- oder austritt. Diese Grenzflächen 7, 8 sind in der Weise ausgeführt, dass sie Licht absorbieren, sie sind beispielsweise als schwarze Flächen ausgeführt. An der Grenzfläche 9 der Verlängerung 5 oberhalb des photosensitiven Sensors 4 tritt das über die Schräge 6 in den Lichtleiter 2 eintretende Licht aus dem Lichtleitelement 2 aus und fällt dabei auf den Sensor 4. Im Sensor 4 wird dann das einfallende Licht ausgewertet und das entsprechende Signal an eine Regelung oder Steuerung im Kraftfahrzeug weitergeleitet.

Unmittelbar vor dem photosensitiven Sensor 3 zur Auswertung des Lichtes V im Vorfeld des Kraftfahrzeuges besitzt das Lichtleitelement 2 eine kugelige, gewölbte oder linsenförmige, in Richtung des Sensors 3 weisende Anformung 10. In diese Anformung 10 des Lichtleitelementes 2, die einstückig an das Lichtleitelement 2 angeformt ist, tritt ebenfalls Licht aus dem Lichtleitelement 2 ein. Durch die gewölbte, kugelige oder linsenförmige Ausbildung der Anformung 10 wird das in den Lichtleiter 2 eintretende Licht in Richtung des Sensors 3 fokussiert. Diese Fokussierung dient dazu ein eindeutiges Signal für die Erfassung des Vorfeldlichtes V zu erhalten.

In einer bevorzugten Ausführungsvariante der Erfindung bildet die Grenzfläche der transparenten Oberfläche 6 zur Windschutzscheibe eine rechteckförmige Grundfläche. Vorstellbar ist hierbei eine Breite des Rechtecks von etwa 3 bis 10 mm, vorzugsweise 5 bis 7 mm. Die Erstreckung der Verlängerung 5 beträgt zirka 8 bis 15 mm, vorzugsweise 12 mm. Der erfassbare Winkel des vertikal auf die Sensoranordnung 1 einfallende Umgebungslicht U liegt in einem Bereich α bei etwa 50° und die Auswertung des Vorfeldlichtes V liegt in einem Bereich β von etwa 10 bis 15°.

Anzumerken ist hierbei, dass die in der Figur 1 dargestellte Ausführungsform der Sensoranordnung 1, die in Grenzen und Abmaßen beziehungsweise in der Anordnung der Sensoren 3, 4 sowie der Ausbildung des Lichtleitelementes 2 lediglich ein Ausführungsbeispiel wiedergibt. Wesentlich bei der Erfindung ist die selektive Erfassung und Auswertung des Vorfeldlichtes V und des Umgebungslichtes U.

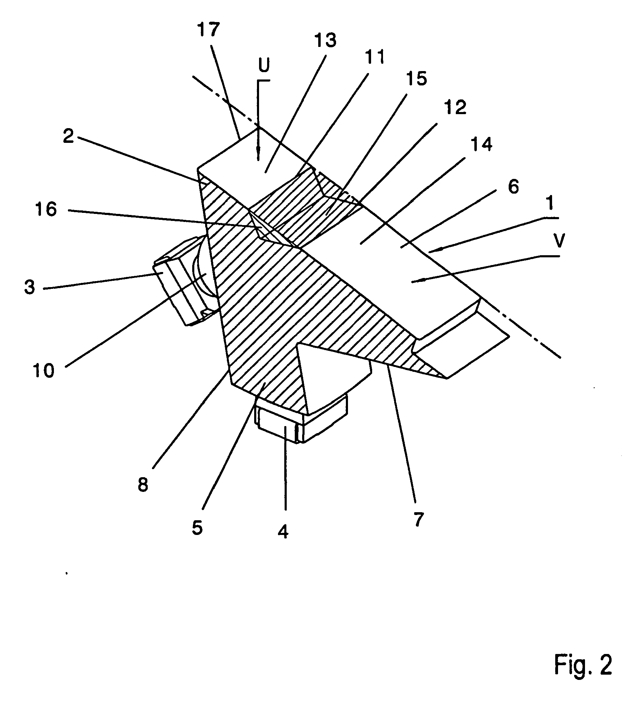

In der Figur 2 ist eine dreidimensionale Ansicht auf die erfindungsgemäß ausgebildete Umgebungslichtsensorik 1 dargestellt, wobei das Lichtleitelement 2 beispielsweise geschnitten dargestellt wiedergegeben ist. Deutlich zu erkennen, ist die im Wesentlichen dreieckige Form des Lichtleitelementes 2 mit der daran angeformten Verlängerung 5 und der Anformung 10.

Die selektive Erfassung des auf die Umgebungslichtsensorik 1 einfallenden Lichtes U, V erfolgt im Wesentlichen dadurch, dass die der transparenten Oberfläche zugewandte Seite 6 des Lichtleitelementes 2 durch zwei Kanten 11, 12 in einen oberen Bereich 13 und einen unteren Bereich 14 geteilt ist. Der zwischen den beiden Kanten 11, 12 liegende Bereich 15 ist für das auf das Kraftfahrzeug einfallende Licht undurchlässig, hierbei jedoch nur dem Spektralbereich des Lichtes, der dem Spektralbereich entspricht, der von den Sensoren 3, 4 erfassbar ist. Durch den Bereich 15 werden an der Oberfläche 6 zwei Bereiche 13, 14 gebildet, die eindeutig in einem oberen Bereich 13 zur Erfassung des Umgebungslichtes U und einen unteren Bereich 14 zur Erfassung des Vorfeldlichtes V einsetzbar sind. Das Licht des Vorfeldes fällt im Wesentlichen horizontal zum Fahrzeug auf das Fahrzeug und somit ebenfalls auf die Windschutzscheibe und den unteren Bereich 14 des Lichtleitelementes 2. Das Licht des Vorfeldes V wird durch den unteren Bereich 14 in das Lichtleitelement 2 eingeleitet und mittels der Anformung 10 in Richtung des Sensors 3 fokussiert. Je nach Schräge der Windschutzscheibe und Anordnung der Umgebungslichtsensorik 1 im Kraftfahrzeug ist hierbei der Sensor 3 zur Anformung 10 positionierbar. Unterstützt wird die eindeutige selektive Erfassung des Vorfeldlichtes V durch eine vorteilhafte Ausgestaltung des Bereiches 15, der in einer vorteilhaften Ausführungsform der Erfindung als V-förmige Nut ausgebildet ist. Hierbei wird die Nut 16 vollständig mit einem im sichtbaren Spektralbereich undurchlässigen Werkstoff gefüllt. Im sichtbaren Spektralbereich undurchlässig heißt in diesem Falle, wie bereits oben beschrieben, dass der Füllwerkstoff für die Nut 16 lediglich den Spektralbereich aus dem auf den Umgebungslichtsensor einfallende Licht herausfiltert, der mittels der Sensoren 3, 4 erfassbar ist. Für andere Spektralbereiche kann dieser Werkstoff ein Leitelement darstellen. Von der ersten Kante 11 bis zum oberen Ende 17 des Lichtleitelementes fällt das Umgebungslicht U in der Weise auf das Leitelement 2, dass es durch das Lichtleitelement 2 hindurchgeleitet und durch die Verlängerung hindurch zum fotosensitiven Sensor 4 gelangt, so dass es mittels des fotosensitiven Sensors 4 erfassbar und auswertbar wird.

Durch die in der Figur 2 dargestellte bevorzugte Ausführungsform der Erfindung ist eine sehr präzise, selektive Erfassung des Lichtes im Vorfeld V des Kraftfahrzeuges wie auch des Umgebungslichtes U möglich. Durch die V-förmige Anordnung eines Bereichs zwischen den Kanten 11, 12 im Lichtleitelement 2 wird eine Streustrahlung wesentlich unterbunden, so dass eine äußerst präzise Erfassung des Lichtes im Vorfeld V des Kraftfahrzeuges wie auch des Umgebungslichtes U durchführbar ist. Eine präzise Erfassung erfolgt dabei beispielsweise für das Vorfeldlicht V aus der Anordnung des unteren Bereiches 14 am Lichtleitelement, der unteren Kante 12, der V-förmigen Nut 16, den Abschattungen an den Grenzflächen 7, 8, sowie mittels der Fokussierung der Anformung 10. Ebenso erfolgt die präzise und erfindungsgemäße Erfassung des Umgebungslichtes U aus dem Zusammenspiel des oberen Bereiches 13, oberhalb der oberen Kante 11, dem Bereich 15, der V-förmigen Nut 16, der Verlängerung 5 und den Abschattungen 7, 8 der das Lichtleitelement 2 umgebenden Grenzflächen 7, 8. Hinzuweisen bleibt darauf, dass die Ausführungsform in den Figuren 1, 2 lediglich ein Ausführungsbeispiel darstellt, wobei Varianten ebenfalls vorstellbar sind.

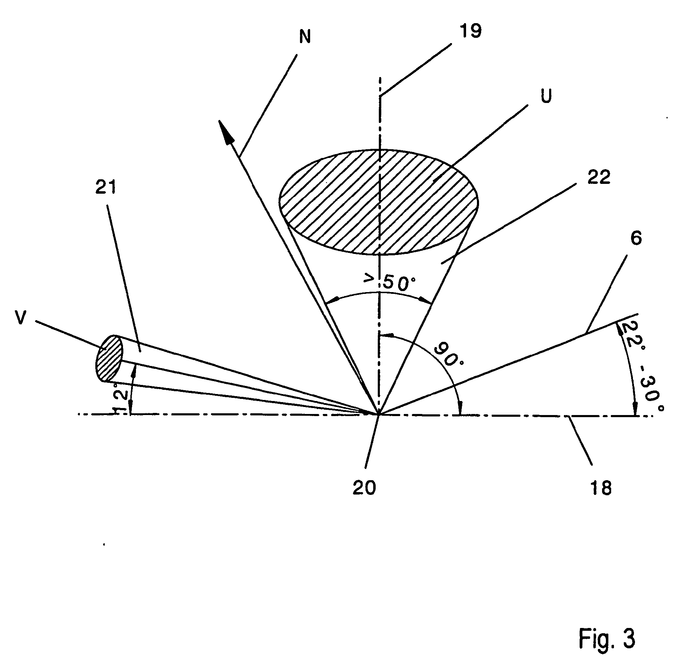

In der Figur 3 ist eine Horizontale 18 und eine Vertikale 19 als strichpunktierte Linien in Bezug auf einen Verlauf der Windschutzscheibe 6 dargestellt. Die Horizontale 18 gibt dabei auch eine im Wesentlichen horizontale Richtung der Fahrbahn des Kraftfahrzeuges wieder. An der Stelle 20 und somit im Schnittpunkt der Horizontalen18 und der Vertikalen 19, ist hinter der nicht dargestellten Windschutzscheibe eine erfindungsgemäße Umgebungslichtsensorik 1 angeordnet. Die Figur 3 gibt hierbei den Winkelbereich 21 einer Vorfeldlichtsensorik 1 mit einem Sensor 3 für das Vorfeldlicht V hinter einer Anformung 10 sowie den erfassbaren Winkelbereich 22 des Umgebungslichtsensors 4 an. Zusätzlich ist noch eine Normale N in Bezug auf den Verlauf 6 der Windschutzscheibe dargestellt. Der hier dargestellte Winkelbereich der Anordnung der Windschutzscheibe in einem Kraftfahrzeug liegt zwischen 22° und 30° zur Horizontalen 18. Ausgehend von der Horizontalen 18 ist ein um 90° versetzter Winkelbereich 22, der im Wesentlichen größer als 50° ist und der das Umgebungslicht U erfasst, dargestellt.

Der Sensor 3 zur Erfassung des Lichtes V im Vorfeld des Kraftfahrzeuges sind in diesem Ausführungsbeispiel in der Weise angeordnet, dass ein Winkelbereich um einen Winkel von ca. 12° erfassbar ist.

## Patentansprüche

1. Umgebungslichtsensorik für die Erfassung des Umgebungs- (U) und Vorfeldlichtes (V) für ein Kraftfahrzeug und zur Anordnung unmittelbar hinter einer schräg verlaufenden Windschutzscheibe, mit einem Lichtleitlelement (2) und mindestens zwei am Lichtleitelement (2) angeordneten Sensoren (3, 4), wobei in der der Windschutzscheibe zugeordneten Oberfläche (6) des Lichtleitelementes (2) mindestens ein mit zwei Kanten (11, 12) begrenzter Bereich vorhanden ist, wobei eine erste Kante (11) einen ersten Oberflächenbereich (13) begrenzt, durch den das Umgebungslicht (U) in das Lichtleitelement (2) einleitbar ist, und eine zweite Kante (12) einen zweiten Oberflächenbereich (14) begrenzt, durch den das Vorfeldlicht (V) in das Lichtleitelement (2) einleitbar ist und dass der Bereich (15) zwischen den beiden Kanten (11,12) mit einem Werkstoff abgedeckt ist, der für den Spektralbereich des durch die Sensoren (3, 4) erfassten Lichtes (U, V) undurchlässig ist,
**dadurch gekennzeichnet, dass** das Lichtleitelement (2) eine im Querschnitt im Wesentlichen dreieckige Form aufweist, und dass hinter je einem Schenkel (7, 8) des Dreiecks ein Sensor (3, 4) angeordnet ist, so dass das Vorfeldlicht (V) auf einen Schenkel des Dreiecks und das Umgebungslicht (U) auf den anderen Schenkel geleitet werden kann, und an das Llchtleitelement (2) in Richtung des Umgebungslichtsensors (4) eine Verlängerung (5) angeformt ist, so dass das senkrecht auf das Kraftfahrzeug einfallende Licht ebenfalls senkrecht durch das Lichtleitelement (2) geleitet werden kann und somit von dem unterhalb der Verlängerung (5) angeordneten Sensor (4) als Umgebungslicht detektierbar ist und in Richtung des Vorfeldlichtsensors (3) eine kugelige-, gewölbte oder linsenförmige Anformung (10) angeformt Ist, die das Vorfeldlicht (V) fokussiert und das senkrecht auf das Lichtleitelement (2) einfallende Umgebungslicht (U) eliminiert.

2. Umgebungslichtsensorik nach Anspruch 1, **dadurch gekennzeichnet, dass** der Sensor (3) zur Erfassung des Vorfeldlichtes (V) hinter einem zur horizontalen senkrechten Schenkel (8) angeordnet ist und dass der Sensor (4) zur Erfassung des Umgebungslichtes (U) hinter einem horizontalen Schenkel (7) angeordnet ist.

3. Umgebungslichtsensorik nach einem der vorhergehenden Ansprüche, **dadurch gekennzeichnet, dass** der im Bereich der Anformung (10) angeordnete Sensor (3) eine Fotodiode ist, mittels der ein vorgebbarer kleiner Winkelbereich (21) auswertbar ist.

4. Umgebungslichtsensorik nach einem der Ansprüche 1 bis 3, **dadurch gekennzeichnet, dass** das Lichtleitelement (2) an den außerhalb der Lichteintritts- und -austrittsflächen gelegenen, das Lichtleitelement (2) begrenzenden Oberflächen (7, 8) mit einem lichtabsorbierenden Werkstoff versehen ist.

## Claims

1. An ambient light sensor system for sensing the ambient (U) and the front light (V) for an automotive vehicle and intended to be arranged directly behind a diagonally extending windscreen, with a light guide element (2) and with at least two sensors (3, 4) disposed on said light guide element (2), at least one area defined by two edges (11, 12) being provided in the surface (6) associated with said windscreen, a first edge (11) defining a first surface area (13) through which the ambient light (U) may be led into said light guide element (2) and a second edge (12) defining a second surface region (14) through which the front light (V) may be led into the light guide element (2) and the area (15) between said two edges (11, 12) being covered with a material that is opaque to the spectral range of the light (U, V) sensed by said sensors (3, 4),
**characterized in that** said light guide element (2) comprises a shape which is substantially triangular in cross section and that a sensor (3, 4) is disposed behind each of the sides (7, 8) of the triangle so that the front light (V) can be led onto one side of the triangle and the ambient light (U) onto the other side of the triangle and that an extended portion (5) extending in the direction of the ambient light sensor (4) is integrally formed with the light guide element (2) so that the light which is vertically incident onto the motor vehicle can also be led vertically through said light guide element (2), thus being detectable as ambient light by the sensor (4) disposed underneath said extended portion (5) and that a spherical, arched or lens-shaped integrally formed portion (10) extends in the direction of the front light sensor (3), said integrally formed portion focussing the front light (V) and eliminating the ambient light (U) which is incident onto said light guide element (2).

2. The ambient light sensor system as set forth in claim 1, **characterized in that** the sensor (3) for sensing front light (V) is disposed behind a side (8) which is perpendicular to the horizontal and that the sensor (4) for sensing ambient light (U) is disposed behind a horizontal side (7).

3. The ambient light sensor system as set forth in any one of the previous claims, **characterized in that** the sensor (3) disposed in the region of the integrally formed portion (10) is a photo diode by means of which it is possible to evaluate a small angular region (21) that may be imposed.

4. The ambient light sensor system as set forth in any one of the claims 1 through 3, **characterized in that** the light guide element (2) is provided with a light-absorbing material on the surfaces (7, 8) which are located outside of the light entrance and light exit surfaces and which are delimiting the light guide element (2).

## Revendications

1. Dispositif à capteurs de lumière ambiante destiné à détecter la lumière ambiante (U) et la lumière de champ avant (V) pour un véhicule automobile et destiné à être disposé directement derrière un pare-brise incliné, comprenant un élément guide de lumière (2) et au moins deux capteurs (3, 4) disposés sur ledit élément guide de lumière (2), dans la surface (6) de l'élément guide de lumière (2) qui est associée au pare-brise étant présente au moins une zone limitée par deux arêtes (11, 12), une première arête (11) limitant une première zone de surface (13) à travers laquelle la lumière ambiante (U) peut être introduite dans ledit élément guide de lumière (2), et une deuxième arête (12) limitant une seconde zone de surface (14) à travers laquelle la lumière de champ avant (V) peut être introduite dans ledit élément guide de lumière (2), et la zone (15) située entre les deux arêtes (11, 12) étant recouverte d'un matériau qui est opaque au domaine spectral de la lumière (U, V) détectée par lesdits capteurs (3, 4),
**caractérisé par le fait que** ledit élément guide de lumière (2) présente une forme pour l'essentiel triangulaire en coupe transversale et que derrière chacun des côtés (7, 8) du triangle est disposé un capteur (3, 4) de sorte que la lumière de champ avant (V) peut être dirigée sur un côté du triangle et la lumière ambiante (U) sur l'autre côté, et que sur ledit élément guide de lumière (2), en direction du capteur de lumière ambiante (4), est formée une rallonge (5) de sorte que la lumière incidente rencontrant perpendiculairement le véhicule automobile peut être dirigée également perpendiculairement à travers ledit élément guide de lumière (2) et peut être détectée ainsi comme lumière ambiante par le capteur (4) disposé au-dessous de ladite rallonge (5), et sur ledit élément guide de lumière (2), en direction du capteur de lumière de champ avant (3), est formée une pièce surmoulée (10) sphérique, bombée ou lenticulaire qui focalise la lumière de champ avant (V) et élimine la lumière ambiante (U) rencontrant perpendiculairement ledit élément guide de lumière (2).

2. Dispositif à capteurs de lumière ambiante selon la revendication 1, **caractérisé par le fait que** ledit capteur (3) de détection de la lumière de champ avant (V) est disposé derrière un côté (8) perpendiculaire à l'horizontale et que le capteur (4) de détection de la lumière ambiante (U) est disposé derrière un côté horizontal (7).

3. Dispositif à capteurs de lumière ambiante selon l'une quelconque des revendications précédentes, **caractérisé par le fait que** ledit capteur (3) disposé au niveau de ladite pièce surmoulée (10) est une photodiode au moyen de laquelle peut être évaluée une petite zone angulaire (21) prédéterminable.

4. Dispositif à capteurs de lumière ambiante selon l'une quelconque des revendications 1 à 3, **caractérisé par le fait que** ledit élément guide de lumière (2) est pourvu, sur les surfaces (7, 8) situées à l'extérieur des faces d'entrée et de sortie de lumière et limitant ledit élément guide de lumière (2), d'un matériau absorbant la lumière.
